# EUROPÄISCHE PATENTSCHRIFT

(11) **EP 0 528 241 B1**
(45) Veröffentlichungstag und Bekanntmachung des Hinweises auf die Patenterteilung: **13.03.1996**
(21) Anmeldenummer: 92113158.7
(22) Anmeldetag: 01.08.1992
(51) Int. Cl.: C09B 67/06, C09B 67/54, C09B 3/02

(54) **Kontinuierliches Verfahren zur umweltfreundlichen Trocknung und Reinigung von Benzanthron**
Continuous process for environment-friendly drying and purification of benzanthrone
Procédé en continu de séchage et de purification écologiques de la benzanthrone

(30) Priorität: 16.08.1991 DE 4127110
(43) Veröffentlichungstag der Anmeldung: 24.02.1993
(73) Patentinhaber: BASF Aktiengesellschaft, D-67063 Ludwigshafen (DE)
(72) Erfinder: Borho, Klaus, Dr., W-6704 Mutterstadt (DE); Grammatis, Zafirios, Dr., W-6704 Mutterstadt (DE); Hennicke, Karl-Heinz,, W-6702 Bad Duerkheim (DE); Mach, Wolfgang, Dr., W-6832 Hockenheim (DE); Mayer, Karl, W-6715 Lambsheim (DE); Sartor, Karl-Heinz, W-7607 Neuried (DE); Stege, Wolf Dieter, W-6700 Ludwigshafen (DE); Thoma, Peter, Dr., W-6710 Frankenthal (DE); Vollmerhaus, Ewald, W-6716 Dirmstein (DE)

(56) Entgegenhaltungen:
- EP-A- 0 339 281
- US-A- 1 365 024
- US-A- 1 591 715
- US-A- 1 794 848
- US-A- 1 900 972
- US-A- 2 138 048

## Beschreibung

Die Erfindung betrifft ein kontinuierliches Verfahren zur umweltfreundlichen Trocknung und Reinigung von Benzanthron.

Benzanthron, ein Farbstoffzwischenprodukt, wird in zwei verschiedenen Produktqualitäten - Rohbenzanthron und Reinbenzanthron - hergestellt.

Derzeit wird Rohbenzanthron aus der Synthesestufe über Filterpressen abgetrennt, mit Wasser ausgewaschen und auf einen Feststoffgehalt von ca. 50 Gew.-% ausgepreßt. Der wasserfeuchte Filterkuchen wird anschließend in Vakuumschaufeltrocknern bei ca. 150°C und 600 mbar (absolut) bis auf einen Restwassergehalt von ca. 1 Gew.-% chargenweise getrocknet. Das trockene Rohbenzanthron enthält noch ca. 15 Gew.-% an festen Verunreinigungen, beispielsweise Eisenoxide und Silikate, aus der Synthesestufe.

Die anschließende Reinigung des getrockneten Rohbenzanthrons zu Reinbenzanthron erfolgt in Sulbimationsöfen bei ca. 400°C und 1 mbar (absolut). Dazu wird das getrocknete Rohbenzanthron manuell in Blechwannen gefüllt und in die Sublimationsöfen gestellt. Beim Aufheizen und Evakuieren dampft das Benzanthron aus den Blechwannen aus und desublimiert an der wassergekühlten Behälterwand des Sublimationsofen, wo es nach jeder Charge manuell von der Wand abgeschlagen werden muß. Der zum Teil harte Rückstand (Verunreinigungen) bleibt auf den Blechen zurück, die ebenfalls nach jeder Charge von Hand gereinigt werden müssen.

Der Nachteil des praktizierten Verfahrens besteht darin, daß man sowohl bei dem getrockneten Rohbenzanthron stark staubende, allergene Produkte erhält, die sowohl innerhalb des praktizierten Verfahrens als auch bei weiterverarbeitenden Betrieben zu erheblichen Problemen führen. Innerhalb des Verfahrens betrifft dies die offene arbeitsintensive Handhabung des Produktes beim Befüllen und Entleeren der Vakuumschaufeltrockner, beim Einfüllen der Trockenware auf die Blechwannen, beim Reinigen dieser Blechwannen und beim Abklopfen des desublimierten Produktes von den Behälterwänden der Sublimationsöfen. Diese manuellen Tätigkeiten sind mit erheblichen Staubbelästigungen und Kontaminationsgefahr des Betriebspersonals verbunden.

Es stellte sich daher die Aufgabe, die Herstellung von Benzanthron ohne die vorgenannten Nachteile zu ermöglichen.

Die Aufgabe wird durch die kennzeichnenden Merkmale der Ansprüche 1 und 2 gelöst.

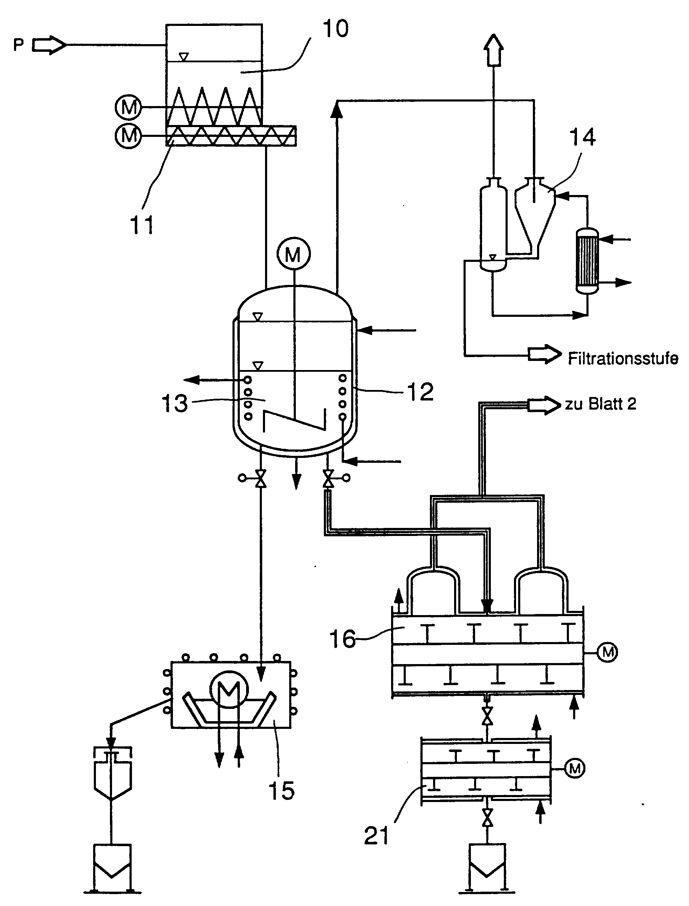

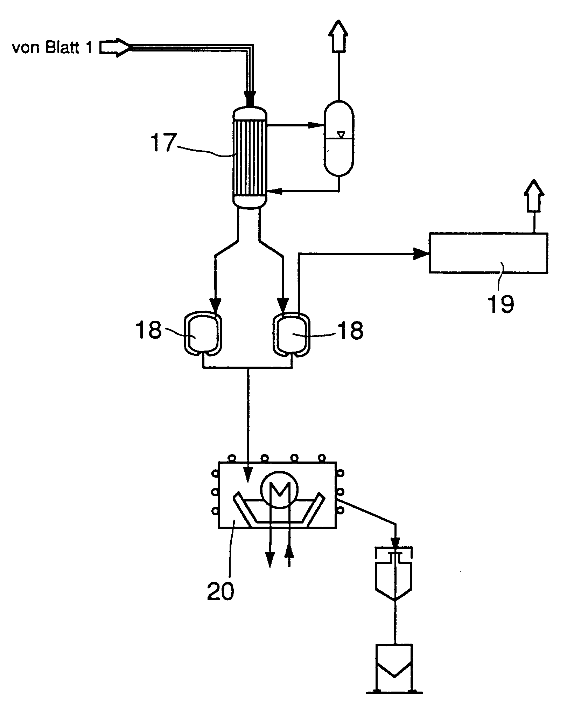

Das erfindungsgemäße Verfahren mit den wesentlichen Verfahrensmerkmalen ist in der Zeichnung dargestellt und wird im folgenden näher beschrieben.

Die Zeichnung zeigt ein vereinfachtes Verfahrensschema, bestehend aus Blatt 1 und 2.

Gemäß dem Verfahrensschema wird Benzanthron enthaltendes Preßgut P aus einer Filterpresse mittels Wannen und mechanischen Transporteinrichtungen in einen mit einem Mischer ausgerüsteten Behälter 10 eingefüllt. Nach Erreichen eines pastösen, pumpfähigen Zustandes wird die Paste mit einem Förderorgan 11 - vorzugsweise einer Exzenterschneckenpumpe - kontinuierlich auf eine in einem Rührkessel 12 vorliegende Schmelze 13 zudosiert. Die in den Rührkessel eingetragene Paste wird mittels des im Rührkessel angeordneten Rührers - vorzugsweise eines Impellerrührers - mit der Schmelze intensiv vermischt, wobei die Paste spontan entwässert und aufgeschmolzen wird. Die hierfür notwendige Wärmeenergie wird dem Rührkessel über eine in die Schmelze eintauchende Heizschlange sowie über den Außenmantel mittels Dampf zugeführt. Die aus dem Rührkessel austretenden Wasserbrüden werden kondensiert - vorzugsweise in einem Strahlwäscher 14 - und als Waschflüssigkeit in der Filtrationsstufe wiederverwendet. Der vorab beschriebene Verfahrensschritt erfolgt bei einem Druck von 1 bar. Die aufgeschmolzene Rohbenzanthronschmelze wird einerseits kontinuierlich über ein Bodenablaßventil aus dem Rührkessel auf eine Walze 15 - vorzugsweise auf eine Tauchwalze - abgelassen, wobei der Füllungsgrad der Tauchwalze als Vorgabe für die Ablaßgeschwindigkeit aus dem Rührkessel gilt. Bei der Tauchwalze kommen gekühlte Eintauchwalzen und beheizte Wannen zur Ausführung. Die entstehenden Schuppen werden als Qualität Rohbenzanthron in Container abgefüllt. Zur Verhinderung von Staub- und Gasemissionen bei der Abfüllung der Schuppen sind übliche Absaugeinrichtungen mit Ventilator und entsprechendem Filter vorteilhaft.

Andererseits wird die aufgeschmolzene Rohbenzanthronschmelze chargenweise über ein Bodenablaßventil aus dem Rührkessel auf einen Vakuumtrockner 16 - vorzugsweise auf einen Discothermvakuumtrockner (im folgenden Trockner genannt) - abgelassen, wobei der Füllungsgrad des Trockners ca. 80 Vol.-% beträgt. Während des Einfüllvorgangs herrschen im Trockner Normaldruck und eine Heizwandtemperatur von ca. 300°C. Danach wird der Trockner auf ca. 8 mbar (absolut) evakuiert. Die Beheizung des Trockners erfolgt mit Thermalöl. Zum Erreichen einer möglichst niedrigen Restbeladung von Benzanthron im Rückstand kann die Heizwandtemperatur in der Trocknungsendphase auf max. 330°C erhöht werden.

Die während der Trocknung aus dem Trockner austretenden Benzanthrondämpfe werden in einem senkrecht angeordneten Rohrbündelkondensator 17 auskondensiert. Die Kondensation erfolgt in den Rohren des Rohrbündels, wobei der Dampf abwärts strömt. Das Kondensat wird in wechselweise betriebenen Behältern 18 gesammelt. Die Kondensationswärme wird durch indirekte Siedekühlung bei 180°C, d. h. durch Wasserdampferzeugung (9 bar abs.) um die Rohre im Rohrbündelkondensator abgeführt.

Die Vakuumerzeugung erfolgt über eine mehrstufige Vakuumanlage 19, bestehend aus einer zweistufigen Dampfstrahlvakuumpumpe, einem Kondensator und einer Wasserringvakuumpumpe.

Die Abschuppung der Reinbenzanthronschmelze - in den Behältern 18 vorliegend - auf der im Dauerbetrieb arbeitenden Schuppenwalze 20 erfolgt wie bei der Rohbenzanthronschuppung. Die zu erwartende Reinheit des gewonnenen Reinbenzanthrons beträgt ca. 98 Gew.-%. Die entstehenden Schuppen werden als Qualität Reinbenzanthron in Containern abgefüllt.

Der nach Trocknungsende im Trockner 16 verbleibende körnig-pulverige Rückstand ist im heißen Zustand pyrophor. Nach Belüften des Trockners mit Stickstoff wird der Rückstand über ein gasdichtes Bodenablaßventil in einem mit Stickstoff inertisierten, wassergekühlten Schaufeltrockner 21 ausgeworfen, dort auf ca. 50°C abgekühlt und anschließend in Container abgefüllt.

## Patentansprüche

1. Kontinuierliches Verfahren zur umweltfreundlichen Trocknung und Reinigung von Benzanthron, gekennzeichnet durch folgende Verfahrensschritte
- Aufgeben einer pumpfähigen, Benzanthron enthaltenden Paste auf eine in einem Rührkessel vorliegenden Schmelze,
- Entwässern und Aufschmelzen der Paste mittels Dampf,
- Kondensieren der aus dem Rührkessel austretenden Wasserbrüden,
- Abschuppen der im Rührkessel vorliegenden Schmelze mittels einer Walze und
- Abfüllen der bei der Abschuppung entstehenden Schuppen.

2. Kontinuierliches Verfahren zur umweltfreundlichen Trocknung und Reinigung von Benzanthron, gekennzeichnet durch folgende Verfahrensschritte
- Aufgeben einer pumpfähigen, Benzanthron enthaltenden Paste auf eine in einem Rührkessel vorliegenden Schmelze,
- Entwässern und Aufschmelzen der Paste mittels Dampf,
- Kondensieren der aus dem Rührkessel austretenden Wasserbrüden,
- Aufgeben der Schmelze auf einen bei ca. 300°C betriebenen Vakuumtrockner,
- Kondensieren der beim Evakuieren aus dem Vakuumtrockner austretenden Benzanthrondämpfe und Sammeln des Kondensatproduktes in Zwischenbehältern,
- Abschuppen des in den Zwischenbehältern vorliegenden Kondensatproduktes mittels einer Walze und
- Abfüllen der bei der Abschuppung entstehenden Schuppen.

## Claims

1. A continuous process for the environmentally friendly drying and purification of benzanthrone, comprising the steps of
- charging a benzanthrone-containing paste of pumpable consistency onto a melt held in a stirred kettle,
- dewatering and melting the paste by means of steam,
- condensing the water vapor emerging from the stirred kettle,
- flaking the melt from the stirred kettle by means of a rotating drum, and
- packaging the flaked solids.

2. A continuous process for the environmentally friendly drying and purification of benzanthrone, comprising the steps of
- charging a benzanthrone-containing paste of pumpable consistency onto a melt held in a stirred kettle,
- dewatering and melting the paste by means of steam,
- condensing the water vapor emerging from the stirred kettle,
- discharging the melt into a vacuum dryer operated at about 300°C,
- condensing the benzanthrone vapor emerging from the vacuum dryer on evacuation and collecting the condensate product in intermediate vessels,
- flaking the condensate product from the intermediate vessels by means of a rotating drum, and
- packaging the flaked solids.

## Revendications

1. Procédé continu pour le séchage et l'épuration, dans de bonnes conditions pour l'environnement, de benzanthrone, caractérisé par les étapes de procédé ci-après :
- alimentation d'une pâte pompable, contenant de la benzanthrone, sur un produit en fusion se présentant dans un récipient à agitation,
- séchage et portée à fusion de la pâte à l'aide de vapeur,
- condensation des buées d'eau sortant du récipient à agitation,
- écaillage du produit fondu présent dans le récipient à agitation, au moyen d'un rouleau, et
- évacuation des écailles produites lors de l'écaillage.

2. Procédé continu pour le séchage et l'épuration, dans des conditions favorables pour l'environnement, de la benzanthrone, caractérisé par les étapes de procédé ci-après :
- alimentation d'une pâte pompable, contenant de la benzanthrone, sur un produit en fusion se présentant dans un récipient à agitation,
- séchage et portée à fusion de la pâte à l'aide de vapeur,
- condensation des buées d'eau sortant du récipient à agitation,
- application du produit en fusion sur un séchoir à vide fonctionnant à une température d'à peu près 300° C,
- condensation des vapeurs de benzanthrone sortant du séchoir à vide lors de la mise sous vide et collecte du produit de condensation dans des récipients intermédiaires
- écaillage du produit de condensation se présentant dans les récipients intermédiaires au moyen d'un rouleau, et
- évacuation des écailles produites lors de l'écaillage.
